# EUROPÄISCHE PATENTSCHRIFT

(11) **EP 2 671 656 B1**
(45) Veröffentlichungstag und Bekanntmachung des Hinweises auf die Patenterteilung: **07.11.2018**
(21) Anmeldenummer: 12004377.3
(22) Anmeldetag: 09.06.2012
(51) Int. Cl.: B23B 51/10

(54) **ENTGRATWERKZEUG ZUM ENTGRATEN VON BOHRUNGSRÄNDERN**
DEBURRING TOOL FOR DEBURRING EDGES OF BOREHOLES
OUTIL D'EBAVURAGE POUR EBAVURER DES BORDS DE TROU DE PERCAGE

(43) Veröffentlichungstag der Anmeldung: 11.12.2013
(73) Patentinhaber: Heule Werkzeug AG, 9436 Balgach (CH)
(72) Erfinder: Heule, Heinrich, 9434 AU SG (CH); Studer, Harry, 9436 Balgach (CH)
(74) Vertreter: Riebling, Peter

(56) Entgegenhaltungen:
- EP-A- 0 446 767
- EP-A1- 2 289 657
- EP-A2- 2 208 566
- DE-A1-102008 046 489
- FR-A- 1 471 025
- JP-A- 9 267 209

## Beschreibung

Gegenstand der Erfindung ist ein Entgratwerkzeug zur Entgratung von ebenen und unebenen Bohrungsrändern nach dem Oberbegriff des Patentanspruchs 1.

Ein derartiges Entgratwerkzeug ist beispielsweise mit der auf den gleichen Anmelder zurückgehenden DE 10 2008 046 489 A1 bekannt geworden. Nachteil dieses bekannten Entgratwerkzeuges ist jedoch, dass zur Halterung des Stabmessers ein sogenannter Messerhalter verwendet werden muss, der aus einem drehbaren Hülsenteil besteht, welcher um zwei, einander gegenüberliegend angeordnete Lagerbolzen drehbar im Grundkörper des Entgratwerkzeuges gehalten ist.

Die Drehlagerung dieses Messerhalters hat sich als ungünstig herausgestellt, denn es mussten von den beiden Seiten des Grundkörpers zwei zueinander fluchtende Bohrungen im Grundkörper angefertigt werden, in welche die Lagerbolzen eingesetzt wurden. Die so montierten Lagerbolzen setzten mit ihren stirnseitigen Enden auf dem im Messerhalter eingesetzten Stabmesser auf.

Auf kleinstem Raum waren somit vier unterschiedliche Teile anzuordnen, nämlich zwei Lagerbolzen, ein drehbar auf den Lagerbolzen gelagerter Messerhalter und ein Stabmesser, welches im Messerhalter auswechselbar aufgenommen war.

Problem der Montage war, dass die Lagerbolzen in den Bohrungen des Grundkörpers nur schwierig im Presssitz festzusetzen waren. Hierzu wurde ein Klebstoff oder ein anderes flüssiges und aushärtbares Mittel verwendet, was wiederum mit dem Nachteil verbunden war, dass, wenn Reste dieses Mittels in den Innenraum des Entgratwerkzeuges gerieten, der Messerhalter selbst nicht mehr drehbar war.

Deshalb waren die Schwierigkeiten bei der Montage und Demontage erheblich. Eine Demontage war nicht möglich, weil die Lagerbolzen fest im Presssitz in den zugehörigen Bohrungen aufgenommen wurden. Um diesen Presssitz der Lagerbolzen zu lösen, musste das gesamte Werkzeug angewärmt werden, um durch thermisch bedingte Längenausdehnung der einzelnen Teile die Lagerbolzen aus ihrem Sitz zu entfernen.

Die EP 2 289 657 A1 offenbart ein Entgratwerkzeug zum Entgraten von Bohrungsrändern ebener oder unebener Form mit einem um seine Längsachse drehbar angetriebenen Grundkörper, in dem mindestens ein Entgratmesser in einem im Grundkörper federbelastet schwenkbar gelagerten Messerhalter auswechselbar gehalten ist. Das Entgratmesser umfasst einen etwa ringförmigen Körper mit einer Öffnung, in welche der Messerhalter eingreift. Der Messerhalter ist als zylindrischer Körper ausgebildet und drehbar in einer Lagerbohrung des Grundkörpers gelagert.

Der Erfindung liegt die Aufgabe zugrunde, ein Entgratwerkzeug nach der DE 10 2008 046 489 A1, mit den gleichen Eigenschaften des dort gezeigten Entgratwerkzeuges, so weiterzubilden, dass das Stabmesser wesentlich einfacher und betriebssicherer im Grundkörper des Entgratwerkzeuges gehalten werden kann.

Zur Lösung der gestellten Aufgabe ist die Erfindung durch die Merkmale des Anspruches definiert. Wesentliches Merkmal der Erfindung ist, dass der Messerhalter nicht mehr mit zwei diametral einander gegenüberliegenden Lagerbolzen im Grundkörper festgehalten ist, sondern als zylindrischer Drehkörper in einer Aufnahmebohrung im Grundkörper drehbar gehalten ist, ohne dass es der Verwendung von Lagerbolzen bedarf. Der Messerhalter weist eine quer zur Längsachse des Messerhalters verlaufende Stabmesserbohrung auf, wobei das Entgratmesser als Stabmesser ausgebildet und in die Stabmesserbohrung eingesetzt ist.

Die erfindungsgemäße Änderung des Messerhalters war mit Schwierigkeiten verbunden. Es musste erkannt werden, dass die in der DE 10 2008 046 489 A1 gezeigten Lagerbolzen dann entfallen können, wenn der Messerhalter als rundzylindrisches Teil bzw. als rundzylindrische Hülse ausgebildet wird, welche Hülse unmittelbar in einer Aufnahmebohrung im Grundkörper aufgenommen ist. Es entfällt somit die Drehhalterung des Messerhalters durch zwei Lagerbolzen, wie es die DE 10 2008 046 489 A1 beschrieb.

Damit ergibt sich der Vorteil, dass nur noch zwei Teile vorhanden sind, nämlich der Messerhalter selbst und das in dem Messerhalter einzusetzende Stabmesser, wobei die Erfindung jedoch nicht darauf beschränkt ist, dass ein einziges Stabmesser in den Messerhalter eingesetzt ist. Es können auch zwei Stabmesser eingesetzt werden, die diametral einander gegenüberliegen. Dies war beim Gegenstand der DE 10 2008 046 489 A1 nicht möglich, denn der dortige Messerhalter war nur für die Aufnahme eines einzigen Stabmessers vorgesehen und geeignet.

Neben der einfacheren Montage des Stabmessers ergibt sich auch eine vereinfachte Demontage, weil das Stabmesser zur Demontage lediglich aus dem zylindrischen Messerhalter herausgezogen werden muss.

Zur einfacheren Montage des Messerhalters wird eine Auszugssicherung verwendet. Die Auszugssicherung besteht aus einem in der Länge kürzbaren und abbrechbaren Bolzen, der eine Querbohrung im Messerhalter durchsetzt und mit einer Seitenfläche in die Bohrung zur Aufnahme des Stabmessers eindringt, und sich an einer zugeordneten Aufnahme am Stabmesser seitlich anlegt, um das Stabmesser gegen unbeabsichtigtes Herausziehen zu sichern.

Anstatt einer solchen abbrechbaren, bolzenförmigen Auszugssicherung können auch andere Auszugssicherungen verwendet werden, wie z. B. eine Schraube, die eingeschraubt wird, oder ein Spreizstift, der in die Bohrung eingetrieben wird und dort verbleibt.

Eine abbrechbare, bolzenartige Auszugssicherung hat jedoch den Vorteil, dass auch bei kleinen Abmessungen des Entgratwerkzeuges eine Handhabe zum Anfassen der bolzenartigen Auszugssicherung gegeben ist und die Handhabe später nach Vollendung der Montage an zugeordneten Sollbruchstellen der Auszugssicherung abgebrochen wird.

Zur Demontage des Messerhalters wird die Auszugssicherung, die bevorzugt an ihrem Kopf einen Schlitz aufweist, mit einem geeigneten Austreibwerkzeug aus der Bohrung ausgetrieben, was besonders einfach gelingt. Sobald die Auszugssicherung entfernt ist, kann auch das Stabmesser entfernt werden, und danach fällt der Messerhalter aus seiner Querbohrung im Grundkörper heraus. Somit ist eine sehr einfache Montage und Demontage gewährleistet.

Die Fertigung eines hülsenförmigen Messerhalters, der zylindrisch ausgebildet ist, ist im Vergleich zu dem in der älteren Patentanmeldung DE 10 2008 046 489 A1 gezeigten komplizierter geformten Messerhalter besonders einfach und kostengünstig.

Weil der Messerhalter mit seinem gesamten Umfang drehbar in der größeren Aufnahmebohrung im Grundkörper gelagert ist und nicht mehr über zwei schmale Lagerbolzen drehbar gehalten ist, ergibt sich eine stabilere Drehlagerung des Messerhalters nach der Erfindung im Vergleich zur älteren Patentanmeldung.

Der Messerhalter kann deshalb in seinem Durchmesser wesentlich größer ausgebildet werden, ebenso wie die dazugehörende Querbohrung im Grundkörper, und damit ergibt sich eine stabile und über eine lange Lebensdauer verschleißfreie Lagerung des Messerhalters, was bei der älteren Patentanmeldung nicht der Fall war.

Ebenso kann die Aufnahmebohrung für das Stabmesser im neuen Messerhalter größer vorgesehen werden als vergleichsweise für den bereits bekannten Messerhalter. Dort war die Größe der Aufnahmebohrung durch die einander entgegengesetzt gerichteten Lagerbolzen beschränkt, die einen bestimmten Überstand haben mussten, um eine noch wirksame Drehlagerung des Messerhalters zu leisten. Dies entfällt nach der Erfindung, denn bei der Erfindung wird die Drehlagerung nicht mehr durch die Lagerbolzen erreicht, sondern direkt durch die Querbohrung selbst, die im Grundkörper angeordnet ist.

Demzufolge kann im Messerhalter eine wesentlich größere Aufnahmebohrung für die Aufnahme des Stabmessers vorgesehen werden als vergleichsweise bei der älteren Patentanmeldung.

Eine größere Bohrung hat zwangsläufig auch eine stabilere Messerhalterung des Stabmessers zur Folge, was mit einer präzisen Führung des Entgratwerkzeugs auch bei kleinen Entgrat-Durchmessern verbunden ist.

Der Erfindungsgegenstand hat im Vergleich zum genannten Stand der Technik folgende Vorteile:
1. Es handelt sich nur noch um ein zweiteiliges, modular aufgebautes Messersystem
2. Das Stabmesser als Verschleissteil kann nun einfach ausgewechselt werden.
3. Der Messerhalter für das Stabmesser ist zugleich auch das Lagerelement im Grundkörper
4. Es sind keine weiteren Lagerelemente, wie Bolzen, Stifte und dgl. erforderlich.
5. Das Stabmesser selbst sichert den Messerhalter in axialer Richtung durch Führung in der Messernute des Grundkörpers.

Bevorzugte Ausführungsformen der vorliegenden Erfindung sind durch die Merkmale der abhängigen Ansprüche definiert.

Im Folgenden wird die Erfindung anhand von einer, lediglich einen Ausführungsweg darstellenden Zeichnung näher erläutert.

Es zeigen:
- Figur 1:: Seitenansicht des Entgratwerkzeuges am vorderen Teil
- Figur 2:: Schnitt gemäß der Linie A-A in Figur 1
- Figur 3:: Schnitt gemäß der Linie B-B in Figur 1
- Figur 4:: die perspektivische Ansicht des Messerhalters
- Figur 5:: die perspektivische Ansicht des Stabmessers
- Figur 6:: die perspektivische Ansicht des Entgratwerkzeugs

Im Hinblick auf die Funktion und den Aufbau des erfindungsgemäßen Entgratwerkzeuges wird auf den Inhalt der auf den gleichen Anmelder zurückgehenden DE 10 2008 046 489 A1 verwiesen. Der dortige Offenbarungsinhalt soll vollumfänglich von der Offenbarung der vorliegenden Erfindung umfasst sein.

Nach einer bevorzugten Ausgestaltung ist der Grundkörper 1 des Entgratwerkzeuges stabförmig, das heißt zylindrisch ausgebildet. Die Erfindung ist hierauf nicht beschränkt. Er kann auch in jeder anderen beliebigen Querschnittsform ausgebildet sein, insbesondere sechseckig, quadratisch oder allgemein polygon.

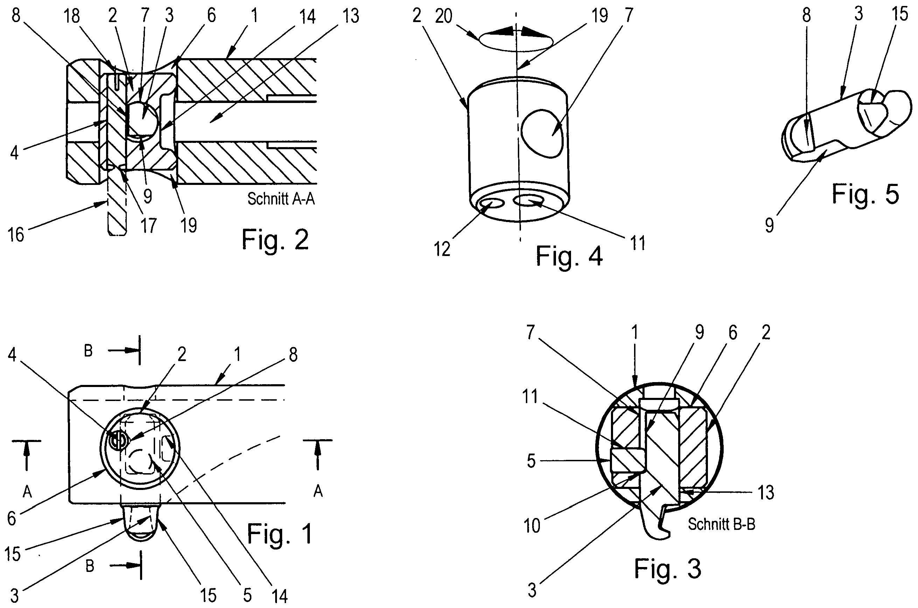

Das vordere Ende des Grundkörpers 1 ist in Figur 1 näher dargestellt. In der Draufsicht ist erkennbar, dass der Messerhalter 2 in einer in Querrichtung den Grundkörper 1 durchsetzenden Lagerbohrung 6 aufgenommen ist. Die Lagerbohrung 6 ist als Querbohrung ausgebildet und durchsetzt den Grundkörper 1 in senkrechter Richtung zu seiner Längserstreckung in der Nähe der Spitze, wie dies am besten aus Figur 1 und 2 zu erkennen ist.

Die Lagerbohrung 6 besteht aus zwei einander gegenüberliegenden und zueinander fluchtenden Bohrungen im Grundkörper. Die beiden Bohrungen der Lagerbohrung 6 sind in der Mitte des Grundkörpers durch die Messernute 13 im Grundkörper voneinander getrennt. Das heißt, im Innenraum ist die Lagerbohrung 6 hohl, sodass der zylinderförmige Messerhalter 2 in die einander gegenüberliegend ausgebildeten Bohrungen in Querrichtung zum Grundkörper in die Lagerbohrung 6 eingesetzt wird. Der Messerhalter 2 ist in Figur 4 perspektivisch dargestellt.

In Figur 2 ist nicht dargestellt, dass in die als Messernute 13 bezeichnete Längsausnehmung im Grundkörper 1 des Entgratwerkzeuges eine längliche Blattfeder eingesetzt ist, die mit ihrem vorderen freien und biegbaren Ende in eine radial außen liegende und einseitig offene Steuernute 14 am Messerhalter 2 eingreift und so eine federnde Vorspannung für die Drehlagerung des Messerhalters 2 ausübt. Der Messerhalter 2 kann deshalb nur entgegen der Kraft der Feder um eine neutrale Mittellage herum in zwei zueinander entgegen gesetzt federvorgespannte Drehlagen gedreht werden.

Statt einer Blattfeder, die mit ihrem freien biegbaren Ende in die zugeordnete, einseitig offene Steuernute 14 am Außenumfang des Messerhalters 2 eingreift, können auch andere Federmittel verwendet werden, wie z. B. eine Schenkelfeder, eine Schraubendruckfeder, oder ein federbelasteter Kolben oder ein federbelasteter Stift oder ein elastomerer Körper.

Das Federspannmittel greift federbelastet am Außenumfang des Messerhalters 2 in die Steuernute 14 ein, sodass dieser nur federbelastet um einen bestimmten Schwenkwinkel von z. B. 45 Grad nach links und rechts um seine Drehachse 19 in den Pfeilrichtungen 20 verdreht werden kann.

Gemäß Figur 4 trägt der zylindrische Messerhalter 2 an seiner Stirnseite eine Bohrung 12, die sich durch den Messerhalter 2 hindurch erstreckt und etwa parallel zur Drehachse 19 angeordnet ist. In diese Bohrung 12 wird eine Auszugsicherung 4 montiert. An ihrer der Handhabe 16 gegenüberliegenden Seite hat die Auszugssicherung 4 einen Schlitz 18 zur axialen Sicherung

Zur Montage des Messerhalters 2 in der quer verlaufenden Lagerbohrung 6 im Grundkörper 1 wird zunächst der Messerhalter 2 als zylindrisches Teil in die Lagerbohrung 6 eingesetzt, wobei die Feder aus der Messernute 13 noch entfernt ist.

Als Nächstes wird das in Figur 5 dargestellte Stabmesser 3 in die Stabmesserbohrung 7 im Messerhalter 2 eingesetzt.

Das Stabmesser 3 ist in Figur 5 näher dargestellt. Von der vorderen Schneidkante 15 ausgehend nach hinten ist am etwa rundzylindrischen Körper des Stabmessers 3 eine den zylindrischen Durchmesser durchbrechende Nute 8 vorgesehen, die z. B. V-förmig profiliert ist.

Ferner ist quer zu den Schneidkanten 15 eine radiale Positionierfläche 9 am Stabmesser 3 vorgesehen.

Zur Montage der gesamten Anordnung wird der Messerhalter 2 ohne eingesetztes Stabmesser 3 in die Lagerbohrung 6 am Grundkörper 1 eingesetzt. Danach wird das Stabmesser 3 in die Stabmesserbohrung 7 am Messerhalter 2 eingesetzt. Wichtig ist, dass eine lagensichere Montage des Stabmessers 3 in der zugeordneten Stabmesserbohrung 7 am Messerhalter 2 dadurch gewährleistet ist, dass das Stabmesser 3 die radiale Positionierfläche 9 aufweist, mit der es in die Bohrung 7 gemäß Figur 3 eingesetzt wird.

In den Bohrungsquerschnitt der Stabmesserbohrung 7 ragt ein Positionierbolzen 5 mit seiner vorderen Stirnseite hinein, der zur Anlage an der Positionierfläche 9 des Stabmessers 3 gebracht wird. Auf diese Weise kann das Stabmesser 3 nicht verkehrt herum oder lagenunrichtig in die Stabmesserbohrung 7 eingesetzt werden.

Statt einem Positionierbolzen 5 können auch andere lagensichernde Vorsprünge vorgesehen werden, die statt eines einschraubbaren Bolzens als feste Vorsprünge in der Stabmesserbohrung 7 angeordnet sind und in den lichten Querschnitt der Stabmesserbohrung 7 eingreifen.

Demgemäß kann das Stabmesser 3 nur in der in Figur 3 dargestellten Orientierung in die Stabmesserbohrung 7 eingesetzt werden. Der Positionierbolzen 5 legt sich daher mit einer vorderen axialen Positionierfläche 10 an der zugeordneten radialen Positionierfläche 9 des Stabmessers 3 an und positioniert dieses lagenrichtig in der Stabmesserbohrung 7.

Der Positionierbolzen 5 wird im Übrigen in einer Positionierbohrung 11 an der unteren Stirnseite des Messerhalters 2 gemäß Figur 4 aufgenommen.

Die Auszugssicherung 4 wird in die Bohrung 12 am Messerhalter 2 eingesetzt. Die Auszugssicherung 4 greift in montiertem Zustand in die Nut 8 am Außenumfang des Stabmessers 3 ein. Die Nut 8 ist bevorzugt V-förmig ausgebildet, um eine verdrehungs- und verschiebungsgesicherte Lage des Stabmessers 3 in der Stabmesserbohrung 7 im Messerhalter 2 zu gewährleisten.

Nach dem Einschieben der Auszugssicherung 4 kann die Handhabe 16 an den Sollbruchstellen 17 abgebrochen werden.

Zur Demontage wird mit einem geeigneten Werkzeug auf den Schlitz 18 der Auszugssicherung 4 eingewirkt, sodass diese in Richtung ihrer Längserstreckung aus der Positionierbohrung 11 herausgeschlagen werden kann.

Danach kann der Verdrehantrieb für den Messerhalter 2 in Form der nicht näher dargestellten Blattfeder montiert werden, die dann in der Messernute 13 eingespannt wird und mit ihrem vorderen und federnden freien Ende in die Steuernute 14 am Außenumfang des Messerhalters 2 eingreift.

Vorteil der dargestellten Montage ist, dass bei Entfernung der Auszugssicherung 4 das Stabmesser 3 sowohl nach vorne in Richtung seiner vorderen Schneidkanten 15.

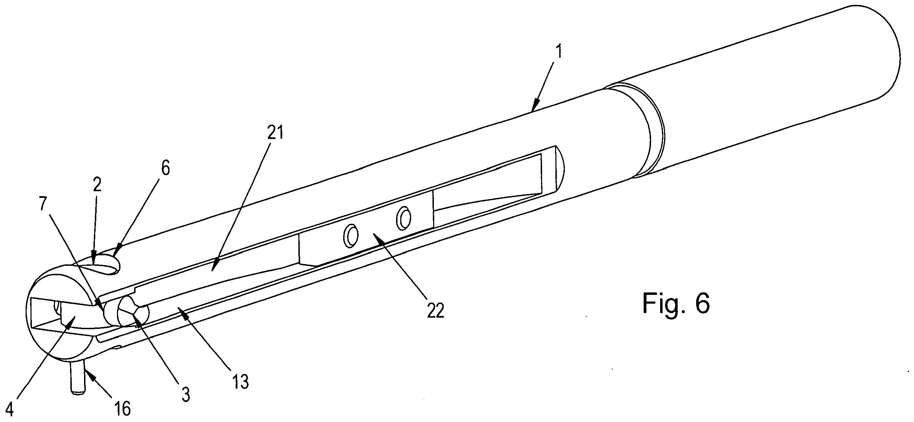

Die Figur 6 zeigt die perspektivische Darstellung des Entgratmessers. Die gleichen Teile sind mit den gleichen Bezugszeichen versehen. Zusätzlich ist ersichtlich, dass eine Biegefeder 21 als einseitig eingespannte Blattfeder die Federvorspannung für den Messerhalter 2 erzeugt. Hierzu ist die Biegefeder 21 mit ihrem hinteren Ende in der Messernute 13 mit einer Anschraubplatte 22 befestigt. Das vordere, freie und biegbare Ende der Biegefeder 21 greift in die Steuernute 14 am Außenumfang des Messerhalters 2 gemäß Figur 1 ein und spannt diesen in den Pfeilrichtungen 20 federbelastet vor.

### Zeichnungslegende

- 1: Grundkörper
- 2: Messerhalter
- 3: Stabmesser
- 4: Auszugssicherung
- 5: Positionierbolzen
- 6: Lagerbohrung
- 7: Stabmesserbohrung
- 8: Nute (Auszugssicherung)
- 9: Positionierfläche radial
- 10: Positionierfläche axial
- 11: Positionierbohrung
- 12: Bohrung Auszugssicherung
- 13: Messernute
- 14: Steuernute
- 15: Schneidkante
- 16: Handhabe
- 17: Sollbruchstelle
- 18: Schlitz
- 19: Drehachse
- 20: Pfeilrichtung
- 21: Biegefeder
- 22: Anschraubplatte

## Patentansprüche

1. Entgratwerkzeug zum Entgraten von Bohrungsrändern ebener oder unebener Form mit einem um seine Längsachse drehbar angetriebenen Grundkörper (1), in dem mindestens ein Entgratmesser (3) in einem im Grundkörper (1) federbelastet schwenkbar gelagerten Messerhalter (2) auswechselbar gehalten ist, wobei der Messerhalter (2) als zylindrischer Körper ausgebildet ist, wobei der Messerhalter (2) eine quer zur Längsachse des Messerhalters (2) verlaufende Stabmesserbohrung (7) aufweist, und das Entgratmesser als Stabmesser (3) ausgebildet und in die Stabmesserbohrung (7) eingesetzt ist, **dadurch gekennzeichnet, dass** der Messerhalter (2) drehbar in einer Lagerbohrung (6) des Grundkörpers (1) gelagert ist.

2. Entgratwerkzeug nach Anspruch 1, **dadurch gekennzeichnet, dass** die Lagerbohrung (6) aus zwei einander gegenüberliegenden und zueinander fluchtenden Bohrungen im Grundkörper besteht.

3. Entgratwerkzeug nach einem der Ansprüche 1 oder 2, **dadurch gekennzeichnet, dass** die beiden Bohrungen der Lagerbohrung (6) in der Mitte des Grundkörpers durch eine Messernute (13) im Grundkörper (1) voneinander getrennt sind

4. Entgratwerkzeug nach einem der Ansprüche 1 bis 3, **dadurch gekennzeichnet, dass** der zylinderförmige Messerhalter (2) in die einander gegenüberliegend ausgebildeten Bohrungen in Querrichtung zum Grundkörper (1) in die Lagerbohrung (6) um seine Drehachse (19) schwenkbar eingesetzt ist.

5. Entgratwerkzeug nach einem der Ansprüche 1 bis 4, **dadurch gekennzeichnet, dass** in die als Längsausnehmung ausgebildete Messernute (13) im Grundkörper (1) eine längliche Biegefeder (21) eingesetzt ist, die mit ihrem vorderen freien und biegbaren Ende in eine radial außen liegende und einseitig offene Steuernute (14) am Messerhalter (2) eingreift und eine federnde Vorspannung für die Drehlagerung des Messerhalters (2) ausübt.

6. Entgratwerkzeug nach einem der Ansprüche 1 bis 5, **dadurch gekennzeichnet, dass** der Messerhalter (2) an seiner Stirnseite eine Bohrung (12) trägt, die sich durch den Messerhalter (2) hindurch erstreckt und etwa parallel zur Drehachse (19) angeordnet ist und dass in die Bohrung (12) die bolzenförmige Auszugssicherung (4) eingesteckt ist.

7. Entgratwerkzeug nach einem der Ansprüche 1 bis 6, **dadurch gekennzeichnet, dass** die Lagensicherung des Messerhalters (2) in der Lagerbohrung (6) des Grundkörpers (1) in axialer Richtung aus dem Stabmesser (3), welches in der Messernute (13) anliegt, besteht.

8. Entgratwerkzeug nach einem der Ansprüche 1 bis 7, **dadurch gekennzeichnet, dass** die Auszugsicherung (4) aus einem in der Länge verkürzbaren und abbrechbaren Bolzen besteht,

9. Entgratwerkzeug nach einem der Ansprüche 1 bis 8, **dadurch gekennzeichnet, dass** die Auszugssicherung (4) an ihrem unteren Ende eine stabförmige Handhabe (16) aufweist, die über Sollbruchstellen (17) mit der Auszugssicherung (4) verbunden ist.

## Claims

1. Deburring tool for deburring bore edges of even or uneven shape having a base body (1) driven rotatably about its longitudinal axis, in which at least one deburring blade (3) is mounted to be replaceable in a blade holder (2) mounted to be pivotable and spring-loaded in the base body (1), wherein the blade holder (2) is designed as a cylindrical body, wherein the blade holder (2) has a bar blade bore (7) running transversely to the longitudinal axis of the blade holder (2), and the deburring blade is designed as a bar blade (3) and is inserted into the bar blade bore (7), **characterised in that** the blade holder (2) is mounted to be rotatable in a bearing bore (6) of the base body (1).

2. Deburring tool according to claim 1, **characterised in that** the bearing bore (6) consists of two bores opposite one another and aligned with respect to one another in the base body.

3. Deburring tool according to one of claims 1 or 2, **characterised in that** the two bores of the bearing bore (6) are separated from one another in the centre of the base body by a blade groove (13) in the base body (1).

4. Deburring tool according to one of claims 1 to 3, **characterised in that** the cylindrical blade holder (2) is inserted into the bores designed to be opposite one another in the transverse direction to the base body (1) to be pivotable into the bearing bore (6) about its rotational axis (19).

5. Deburring tool according to one of claims 1 to 4, **characterised in that** an elongated spiral spring (21), which engages with its front free and flexible end into a radially outwardly lying control groove (14) which is open on one side on the blade holder (2) and exerts a resilient pretension for the pivot mounting of the blade holder (2), is inserted into the blade groove (13) designed as a longitudinal recess in the base body (1).

6. Deburring tool according to one of claims 1 to 5, **characterised in that** the blade holder (2) on its end-face side supports a bore (12) which extends through the blade holder (2) and is arranged approximately parallel to the rotational axis (19) and **in that** the bolt-like pull-out security device (4) is inserted into the bore (12).

7. Deburring tool according to one of claims 1 to 6, **characterised in that** positional securing of the blade holder (2) in the bearing bore (6) of the base body (1) exists in axial direction from the bar blade (3) which rests in the blade groove (13).

8. Deburring tool according to one of claims 1 to 7, **characterised in that** the pull-out security device (4) consists of a bolt which can be shortened in length and can be broken off.

9. Deburring tool according to one of claims 1 to 8, **characterised in that** the pull-out security device (4) has at its lower end, a bar-like handle (16) which is connected to the pull-out security device (4) via predetermined breaking points (17).

## Revendications

1. Outil d'ébavurage pour l'ébavurage de bords d'alésage de forme plane ou non plane, avec un corps de base (1) entraîné en rotation sur son axe longitudinal, dans lequel au moins une lame d'ébavurage (3) est maintenue, en pouvant être changée, dans un porte-lame (2) monté à ressort et pivotant dans le corps de base (1), le porte-lame (2) étant conçu comme un corps cylindrique, le porte-lame (2) présentant un alésage de lame à tige (7) qui s'étend transversalement par rapport à l'axe longitudinal du porte-lame (2), et la lame d'ébavurage étant conçue comme une lame à tige (3) et étant placée dans ledit alésage de lame à tige (7),
**caractérisé en ce que** le porte-lame (2) est monté en rotation dans un alésage (6) du corps de base (1).

2. Outil d'ébavurage selon la revendication 1, **caractérisé en ce que** l'alésage (6) se compose de deux perçages opposés et alignés, dans le corps de base.

3. Outil d'ébavurage selon l'une des revendications 1 ou 2, **caractérisé en ce que** les deux perçages de l'alésage (6) sont séparés l'un de l'autre au milieu du corps de base par une rainure de lame (13) dans ledit corps de base (1).

4. Outil d'ébavurage selon l'une des revendications 1 à 3, **caractérisé en ce que** le porte-lame cylindrique (2) est placé, pivotant sur son axe de rotation (19), dans l'alésage (6) dans les perçages qui se font face, dans le sens transversal par rapport au corps de base (1).

5. Outil d'ébavurage selon l'une des revendications 1 à 4, **caractérisé en ce qu'**il est prévu, introduit dans la rainure de lame (13) conçue comme un creux longitudinal dans le corps de base (1), un ressort à lame oblong (21) qui pénètre avec son extrémité avant et flexible dans une rainure de commande (14) située radialement à l'extérieur et ouverte sur un côté, sur le porte-lame (2), et qui exerce une précontrainte élastique pour le montage en rotation du porte-lame (2).

6. Outil d'ébavurage selon l'une des revendications 1 à 5, **caractérisé en ce que** le porte-lame (2) porte sur son côté frontal un perçage (12) qui traverse le porte-lame (2) et est disposé à peu près parallèlement à l'axe de rotation (19), et **en ce que** dans le perçage (12) est introduit un élément anti-extraction en forme de boulon (4).

7. Outil d'ébavurage selon l'une des revendications 1 à 6, **caractérisé en ce que** le blocage de position du porte-lame (2) dans l'alésage (6) du corps de base (1) dans le sens axial se compose de la lame à tige (3) qui est appliquée dans la rainure de lame (13).

8. Outil d'ébavurage selon l'une des revendications 1 à 7, **caractérisé en ce que** l'élément anti-extraction (4) se compose d'un boulon apte à être raccourci dans sa longueur et à se rompre.

9. Outil d'ébavurage selon l'une des revendications 1 à 8, **caractérisé en ce que** l'élément anti-extraction (4) présente à son extrémité inférieure une manette en forme de tige (16) qui est reliée par des points de rupture (17) audit élément anti-extraction (4).
